(19) Europäisches Patentamt
European Patent Office
Office européen des brevets

(11) **EP 4 099 237 A1**

(12) **EUROPEAN PATENT APPLICATION**
published in accordance with Art. 153(4) EPC

(43) Date of publication:
07.12.2022 Bulletin 2022/49

(51) International Patent Classification (IPC):
*G06Q 10/04* (2012.01)

(21) Application number: 20923491.3

(22) Date of filing: 27.07.2020

(86) International application number:
PCT/CN2020/104902

(87) International publication number:
WO 2021/174755 (10.09.2021 Gazette 2021/36)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 02.03.2020 CN 202010133886

(71) Applicant: CRSC Research & Design Institute Group Co., Ltd.
Beijing 100070 (CN)

(72) Inventors:
• WEI, Wei
Beijing 100070 (CN)
• LIU, Ling
Beijing 100070 (CN)
• LIU, Jun
Beijing 100070 (CN)
• ZHANG, Bo
Beijing 100070 (CN)
• WANG, Zhoufan
Beijing 100070 (CN)

(74) Representative: Huang, Liwei
Cäcilienstraße 12
40597 Düsseldorf (DE)

(54) **RAIL TRANSIT PASSENGER FLOW DEMAND PREDICTION METHOD AND APPARATUS BASED ON DEEP LEARNING**

(57) The present disclosure provides are a rail transit passenger flow demand prediction method and apparatus based on deep learning. The prediction method comprises the following steps: acquiring OD data, converting the data into periodic OD two-dimensional graph sequence data; inputting the periodic OD two-dimensional graph sequence data into a spatial complex-associated convolutional residual network model, and outputting spatial feature data; inputting the spatial feature data into a time feature information extraction model, and outputting time feature data; performing feature extraction by using time feature data to obtain an OD passenger flow value at a prediction moment; and assessing the prediction method as required. In accordance with the method, a predicted OD passenger flow value at a prediction moment is obtained by analyzing the multi-period association of the OD data and extracting the feature data, and thus the prediction accuracy is high.

FIG. 1

**Description**

**CROSS REFERENCE TO RELATED APPLICATION**

This application claims priority from Chinese Patent Application No. 202010133886.2 filed on Monday, March 02, 2020, the disclosure of the above-mentioned Chinese Patent Application is incorporated herein by reference in its entirety as part of the present application.

**TECHNICAL FIELD**

The present disclosure belongs to the field of rail transit passenger flow prediction, and in particular relates to a rail transit passenger flow demand prediction method and apparatus based on deep learning.

**BACKGROUND ART**

Rail transit is an important mode of transportation in China, is the "backbone" of China's transportation, and is the lifeline project of the city, which has the characteristics of large transportation volume, all-weather, safety, low energy consumption, less pollution and the like, and is of an important significance for achieving the sustainable development of the city. With the rapid development of information technology, intelligence and informationization have become the important development direction of rail transit, while passenger flow demand prediction is an important link to realize the modern rail transit system network. Accurate short-time passenger flow demand prediction is conducive to optimizing the pre-allocation of transportation resources, reducing operation costs of rail transit, and improving the convenience of travel for passengers.

Passenger flow demand has dynamic space-time characteristics. The key to accurately predict the passenger flow demand is how to accurately sense the time dependence and spatial dependence of passenger flow demand. In the time dimension, the origin-destination (ORIGIN-DESTINATION, OD) passenger flow demand has a certain periodicity and trend. The OD passenger flow demand at a particular moment will not only be dependent on the passenger flow demand at its adjacent historical moment, but also is related to the passenger flow demand at its historical moment of different periods. For example, the OD passenger demand at the same moment of the previous day, the same moment of the previous week, the same moment of the previous month and the like may have some influence on the OD passenger flow demand at this moment. Therefore, the OD passenger flow demand has a dependency relationship that multi-period modes coexist in the time dimension, namely, multi-period correlation. In the spatial dimension, passenger flow demand between stations or tracks at different spatial locations can affect each other, as can passenger flow demand from the same origin to adjacent destinations or from adjacent origins to the same destination. In addition, there are also common and obvious characteristics of OD passenger flow demand in the spatial dimension, which are origin dependence and destination dependence. Provided that there are many companies at place A, a clear correlation exists in the amount of passenger flow arriving at place A from the adjacent origins in the morning, which reflects the origin dependence (or association) of passenger flow demand. There is also a mutual correlation in the passenger flow arriving at the adjacent destinations from the place A in the afternoon, which reflects the destination dependence (or association) of the passenger flow demand.

At present, most of the modeling approaches adopted are configured to predict short-time entering-exiting passenger flow based on historical passenger flow data of the station. Such method cannot accurately reflect the passenger demand of rail transit. The rail transit passenger flow demand refers to the passenger flow demand from a particular origin to a particular destination, and the passenger flow demand has complex dynamic and non-linear time-space characteristics. At present, most of the existing rail transit OD passenger flow demand prediction methods are configured to predict the OD passenger flow demand based on the sequential characteristics, while the widespread spatial association in OD passenger flow data is ignored. In a few methods for predicting the OD passenger demand based on space-time characteristics, only the spatial association among different OD passenger demands is considered, while the difference between the origin dependence and destination dependence of the OD passenger flow demand is ignored. In terms of time feature extraction, the time characteristics of OD passenger flow demand are not deeply explored, and the association of OD passenger flow demand under different periodic modes is not refined, such that the multiple periodic association of rail transit OD passenger flow demand cannot be perceived.

**SUMMARY**

For above problems, the present disclosure provides a rail transit passenger flow demand prediction method based on deep learning. The method includes the following steps.

acquiring OD data, and converting the OD data into periodic OD two-dimensional graph sequence data;

extracting spatial feature data in the periodic OD two-dimensional graph sequence data by using a spatial complex-associated convolutional residual network model;

extracting time feature data in the spatial feature data by using a time feature extraction model; and

performing feature extraction processing on the time feature data to obtain a predicted OD passenger flow value at a prediction moment.

Further, the extracting spatial feature data in the periodic OD two-dimensional graph sequence data includes:

performing row stacking conversion on the periodic OD two-dimensional graph sequence data to obtain one-dimensional row-stacked OD data;

performing column stacking conversion on the periodic OD two-dimensional graph sequence data to obtain one-dimensional column-stacked OD data;

performing convolutional residual processing on the one-dimensional row-stacked OD data to obtain destination-associated spatial feature information;

performing convolutional residual processing on the one-dimensional column-stacked OD data to obtain origin-associated spatial feature information;

performing convolutional residual processing on the periodic OD two-dimensional graph sequence data to obtain hybrid-associated spatial feature information; and

concatenating the destination-associated spatial feature information, the origin-associated spatial feature information and the hybrid-associated spatial feature information to obtain the spatial feature data.

Further, performing convolutional residual processing on the data includes:

performing convolutional pooling on the one-dimensional row-stacked OD data;

performing convolutional pooling on the one-dimensional column-stacked OD data; and

performing convolutional pooling on the periodic OD two-dimensional graph sequence data.

Further, the one-dimensional row-stacked OD data is subjected to convolutional pooling by using a first convolutional pooling function, and

the first convolutional pooling function is expressed as follows:

$$|X_o(k){=}pool(f(w_o(k){*}X_o(k{-}1){+}b_o(k)))\cdot(1)\cdot$$

in the expression (1), pool is a pooling layer, f is an activation function, $w_o(k)$ is a weight that the $k^{th}$ layer of network unit needs to learn, and $b_o(k)$ is a bias that the $k^{th}$ layer of network unit needs to learn.

The one-dimensional column-stacked OD data is subjected to convolutional pooling by using a second convolutional pooling function, and

the second convolutional pooling function is expressed as follows:

$$X_d(k){=}pool(f(w_d(k){*}X_d(k{-}1){+}b_d(k)))\cdots(2)$$

in the expression (2), pool is a pooling layer, f is an activation function, $w_d(k)$ is a weight that the $k^{th}$ layer of network unit needs to learn, and $b_d(k)$ is a bias that the $k^{th}$ layer of network unit needs to learn.

The periodic OD two-dimensional graph sequence data is subjected to convolutional pooling by using a third convolutional pooling function, and

the third convolutional pooling function is expressed as follows:

$$X_{conv2}(k){=}pool(f(w_{conv2}(k){*}X_{conv2}(k{-}1){+}b_{conv2}(k)))\cdot\cdot(3)$$

in the expression (3), pool is a pooling layer, f is an activation function, $w_{conv2}(k)$ is a weight that the $k^{th}$ layer of network unit needs to learn, and $b_{conv2}(k)$ is a bias that the $k^{th}$ layer of network unit needs to learn.

Further, the step of performing feature extraction on the time feature data includes:

performing fusion processing on the time feature data to obtain time feature fusion data; and
performing feature extraction on the time feature fusion data to obtain a predicted OD passenger flow value.

Further, the prediction method further includes:

assessing the predicted OD passenger flow value by using a mean absolute error and a mean square error; and
acquiring a mean absolute error and a mean square error between a true value and the predicted value, wherein the prediction accuracy of the prediction method satisfies requirements when the mean absolute error is less than or equal to a first threshold and the mean square error is less than or equal to a second threshold.

The present disclosure further provides a rail transit passenger flow demand prediction apparatus based on deep learning. The prediction apparatus includes:

a data input module, configured to acquire OD data, to convert the OD data into periodic OD two-dimensional graph sequence data, and to output the periodic OD two-dimensional graph sequence data;
a spatial feature information extraction module, configured to extract spatial feature data in the periodic OD two-dimensional graph sequence data by using a spatial complex-associated convolutional residual network model;
a time information extraction module in multi-period mode, configured to extract time feature data in the spatial feature data; and
a data output module, configured to perform feature extraction on the time feature data so as to obtain a predicted OD passenger flow value at a prediction moment.

Further, the spatial complex-associated convolutional residual network model includes a number of spatial-associated convolutional residual networks, and the spatial-associated convolutional residual networks are configured to extract spatial-associated feature data of the periodic OD two-dimensional graph sequence data.
Further, each of the spatial-associated convolutional residual networks includes a data conversion module, a convolutional residual module, and a spatial feature information concatenation module.
The data conversion module includes a row stacking conversion module and a column stacking conversion module.
The row stacking conversion module is configured to: receive the periodic OD two-dimensional graph sequence data transmitted from a data input layer, perform row stacking conversion on the periodic OD two-dimensional graph sequence data, and output one-dimensional row-stacked OD data.
The column stacking conversion module is configured to: receive the periodic OD two-dimensional graph sequence data transmitted from the data input layer, perform column stacking conversion on the periodic OD two-dimensional graph sequence data, and output one-dimensional column-stacked OD data.
The convolutional residual module includes a first convolutional residual unit, a second convolutional residual unit, and a third convolutional residual unit.
The first convolutional residual unit is configured to: receive the one-dimensional row-stacked OD data transmitted from the row stacking conversion module, perform convolutional residual processing on the one-dimensional row-stacked OD data, and output a destination-associated spatial feature information.
The second convolutional residual unit is configured to: receive the one-dimensional column-stacked OD data transmitted from the column stacking conversion module, perform convolutional residual processing on the one-dimensional column-stacked OD data, and output an origin-associated spatial feature information.
The third convolutional residual unit is configured to: receive the periodic OD two-dimensional graph sequence data transmitted from the data input layer, perform convolutional residual processing on the periodic OD two-dimensional graph sequence data, and output a hybrid-associated spatial feature information.
The spatial feature information concatenation module is configured to receive the spatial feature information transmitted from the first convolutional residual unit, the second convolutional residual unit, and the third convolutional residual unit, and concatenate the destination-associated spatial feature information, the origin-associated spatial feature information and the hybrid-associated spatial feature information.
Further, the first convolutional residual unit includes a first convolution neural unit and a residual connection.
The second convolutional residual unit includes a second convolutional neural unit and a residual connection.
The third convolutional residual unit includes a third convolutional neural unit and a residual connection.

The first convolutional neural unit is configured to perform convolutional pooling on the one-dimensional row-stacked OD data, and the first convolutional neural unit is a one-dimensional convolutional unit.

The second convolutional neural unit is configured to perform convolutional pooling on the one-dimensional column-stacked OD data, and the second convolutional neural unit is a one-dimensional convolutional unit.

The third convolutional neural unit is configured to perform convolutional pooling on the periodic OD two-dimensional graph sequence data, and the third convolutional neural unit is a two-dimensional convolutional unit.

Further, the first convolutional neural unit is configured to perform convolutional pooling as follows:

$$X_o(k) = pool(f(w_o(k)*X_o(k-1)+b_o(k)))$$

where pool is a pooling layer, f is an activation function, $w_o(k)$ is a weight that the $k^{th}$ layer of network unit needs to learn, and $b_o(k)$ is a bias that the $k^{th}$ layer of network unit needs to learn.

The second convolutional neural unit is configured to perform convolutional pooling as follows:

$$X_d(k) = pool(f(w_d(k)*X_d(k-1)+b_d(k)))\cdot$$

where pool is a pooling layer, f is an activation function, $w_d(k)$ is a weight that the $k^{th}$ layer of network unit needs to learn, and $b_d(k)$ is a bias that the $k^{th}$ layer of network unit needs to learn.

The third convolutional neural unit is configured to perform convolutional pooling as follows:

$$X_{conv2}(k) = pool(f(w_{conv2}(k)*X_{conv2}(k-1)+b_{conv2}(k)))\cdot$$

where pool is a pooling layer, f is an activation function, $w_{conv2}(k)$ is a weight that the $k^{th}$ layer of network unit needs to learn, and $b_{conv2}(k)$ is a bias that the $k^{th}$ layer of network unit needs to learn.

Further, the time information extraction module in multi-period mode is configured to: receive the spatial feature data transmitted from the spatial feature information extraction module, and output the time feature data.

A spatial feature information extraction layer is a time feature extraction model.

Further, the time feature extraction model is a long-short term memory neural network model.

Further, the data output module is configured to: receive the time feature data transmitted from the time information extraction module in the multi-period mode, and output the predicted OD passenger flow value at the prediction moment.

Further, the data output module includes a concatenation module and a dense module.

The concatenation module is configured to: receive the time feature data transmitted from the time information extraction module in the multi-period mode, fuse the time feature data, and output fused time feature.

The dense module is configured to: receive the fused time feature transmitted from the concatenation module, perform feature extraction on the fused time feature, and output the predicted OD passenger flow value at the prediction moment.

Further, the prediction apparatus further includes an assessment apparatus.

The assessment apparatus is configured to assess the prediction accuracy of the rail transit passenger flow demand prediction method and apparatus based on the deep learning by using a mean absolute error and a mean square error.

In accordance with the present disclosure, a predicted OD passenger flow value at a prediction moment is obtained by analyzing the multi-period association of the OD data and extracting the feature data, and thus the prediction accuracy is high.

Additional features and advantages of the present disclosure will be set forth in the description which follows, and in part will be apparent from the description, or may be learned by practice of the present disclosure. The objectives and other advantages of the present disclosure will be realized and attained by the structure particularly pointed out in the specification, the claims as well as the accompanying drawings.

**BRIEF DESCRIPTION OF THE DRAWINGS**

To describe the technical solutions in the embodiments of the present disclosure or in the prior art more clearly, the following briefly introduces the accompanying drawings required for describing the embodiments. Apparently, the accompanying drawings in the following description show merely some embodiments of the present disclosure, and a person of ordinary skill in the art may still derive other drawings from these accompanying drawings without creative efforts.

FIG. 1 illustrates a flow chart of a rail transit passenger flow demand prediction method based on deep learning in accordance with embodiments of the present disclosure;

FIG. 2 illustrates a model diagram of a rail transit passenger flow demand prediction apparatus based on deep learning in accordance with embodiments of the present disclosure;

FIG. 3 illustrates a structure diagram of a spatial-associated convolutional residual network in accordance with embodiments of the present disclosure;

FIG. 4 illustrates a structure diagram of a convolutional residual unit in accordance with embodiments of the present disclosure;

FIG. 5 illustrates a structure diagram of a one-dimensional convolutional unit in accordance with embodiments of the present disclosure;

FIG. 6 illustrates a structure diagram of a two-dimensional convolutional unit in accordance with embodiments of the present disclosure.

## DETAILED DESCRIPTION

In order to make the objectives, technical solutions and advantages of the embodiments of the present disclosure more clearly, the following clearly and completely describes the technical solutions in the embodiments of the present disclosure with reference to the accompanying drawings in the embodiments of the present disclosure. Apparently, the described embodiments are merely a part rather than all of the embodiments of the present disclosure. All other embodiments obtained by those of ordinary skill in the art based on the embodiments of the present disclosure without creative efforts shall fall within the protection scope of the present disclosure.

In order to make the objectives, technical solutions and advantages of the embodiments of the present disclosure more clearly, the following clearly and completely describes the technical solutions in the embodiments of the present disclosure with reference to the accompanying drawings in the embodiments of the present disclosure. Apparently, the described embodiments are merely a part rather than all of the embodiments of the present disclosure. All other embodiments obtained by those of ordinary skill in the art based on the embodiments of the present disclosure without creative efforts shall fall within the protection scope of the present disclosure.

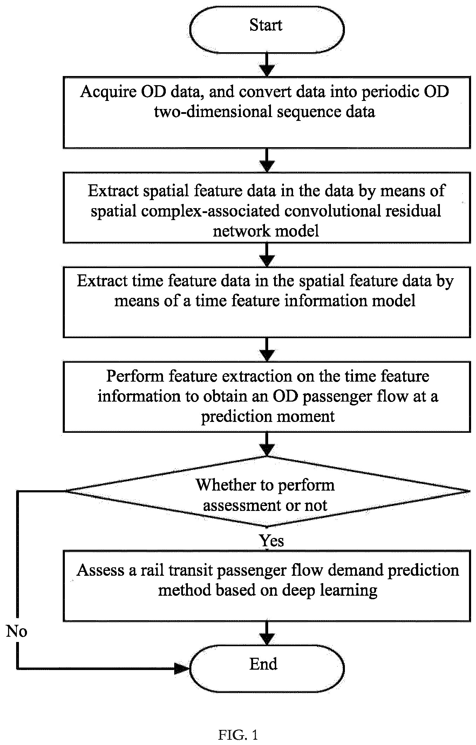

The present disclosure is not limited to predicting the rail transit passenger flow, and is also suitable for other traffic passenger flows limited by origin and destination of long-distance buses, steamships, shipping and the like. The prediction of the rail transit passenger flow is taken as an example here. The present disclosure provides a rail transit passenger flow demand prediction method based on deep learning. The prediction method may employ, but is not limited to, the following processes. Illustratively, as shown in FIG. 1, the prediction method includes:

Step one, acquiring OD data, and converting the OD data into periodic OD two-dimensional graph sequence data.

Specifically, the OD data is acquired, and then is converted into the periodic OD two-dimensional graph sequence data.

An acquisition period of the OD data is preset, and the OD data is acquired at fixed time in one acquisition period. The acquired OD data are sorted and converted into OD two-dimensional graphs. All OD two-dimensional graphs are divided into a plurality of groups of periodic OD two-dimensional graph sequence data according to the corresponding acquisition periods.

The OD data refers to origin-destination passenger flow demand data.

Illustratively, four types of acquisition periods are preset: an acquisition period for a periodic OD sequence 1 is 12 weeks, a sample acquisition period for a periodic OD sequence 2 is 7 days, an acquisition period for a periodic OD sequence 3 is 1 day, and a periodic OD sequence 4 refers to all data from the beginning of the day to moment before prediction. The OD data is acquired every 5 min during one period.

Illustratively, the OD two-dimensional graph may employ, but is not limited to, the following structures:

$$X_t^{i,j} = \begin{bmatrix} x_t^{0,0} & \cdots & x_t^{0,m} \\ \cdots & x_t^{i,j} & \cdots \\ x_t^{n,0} & \cdots & x_t^{n,m} \end{bmatrix},$$

where $x_t^{i,j}$ is a passenger flow demand from a station i to a station j at the moment t , i is the serial number of the origin, and j is the serial number of the destination; n and m are positive integers, i is an integer between 0 and n, and j is an integer between 0 and m.

Illustratively, the serial number of the origin and the serial number of the destination may be different, which may employ, but are not limited to, the following ways: for example, the origin is the following areas: Beijing, Shanghai, Tianjin, Chongqing..., with the serial numbers of 0, 1, 2, 3... in sequence, and

the destinations are the following areas: Beijing, Shanghai, Tianjin..., with the serial numbers of 0, 1, 2... in sequence.

At the moment t, the Beijing-Shanghai passenger flow demand is 50, the Beijing-Tianjin passenger flow demand is 200, the Shanghai-Beijing passenger flow demand is 60, the Shanghai-Tianjin passenger flow demand is 7, the Tianjin-Beijing passenger flow demand is 300, the Tianjin-Shanghai passenger flow demand is 8, the Chongqing-Beijing passenger flow demand is 15, the Chongqing-Shanghai passenger flow demand is 2, and the Chongqing-Tianjin passenger flow demand is 18, such that the corresponding OD two-dimensional graphs are as follows:

$$x_t^{i,j} = \begin{bmatrix} 0 & 50 & 200 \\ 60 & 0 & 7 \\ 300 & 8 & 0 \\ 15 & 2 & 18 \end{bmatrix}$$

Step two, extracting spatial feature data in the periodic OD two-dimensional graph sequence data by using a spatial complex-associated convolutional residual network model.

Specifically, the periodic OD two-dimensional graph sequence data is subjected to row stacking conversion to obtain one-dimensional row-stacked OD data.

Illustratively, the data after row stacking conversion is as follows:

$$X_o = \begin{bmatrix} x_t^{0,0} & \cdots & x_t^{i,j} & x_t^{i,j+1} & \cdots & x_t^{n,m} \end{bmatrix}$$

where i is the serial number of the origin, j is the serial number of the destination, n and m are positive integers, i is an integer between 0 and n, and j is an integer between 0 and m.

Specifically, the periodic OD two-dimensional graph sequence data is subjected to column stacking conversion to obtain one-dimensional column-stacked OD data.

Illustratively, the input data after column stacking conversion is as follows:

$$X_d = \begin{bmatrix} x_t^{0,0} & \cdots & x_t^{i,j} & x_t^{i+1,j} & \cdots & x_t^{n,m} \end{bmatrix}$$

where i is the serial number of the origin, j is the serial number of the destination, n and m are positive integers, i is an integer between 0 and n, and j is an integer between 0 and m.

Specifically, the one-dimensional row-stacked OD data is subjected to convolutional residual processing to obtain destination-associated spatial feature information.

Specifically, the convolutional residual processing includes: performing convolutional pooling on the one-dimensional row-stacked OD data.

Illustratively, the one-dimensional row-stacked OD data needs to be subjected to multiple times of convolutional pooling.

A first convolutional pooling function is utilized to perform once convolutional pooling on the one-dimensional row-stacked OD data so as to obtain destination-associated spatial feature information 1; then the first convolutional pooling function is utilized to perform convolutional pooling on the output destination-associated spatial feature information 1 again so as to obtain destination-associated spatial feature information 2, and so on; and the first convolutional pooling function is utilized to perform convolutional pooling on the output destination-associated spatial feature information n-1 for the n-th time so as to obtain destination-associated spatial feature information n. In this way, multiple times of convolution pooling on the one-dimensional row-stacked OD data are completed.

Specifically, the first convolutional pooling function is expressed as follows:

$$X_o(k) = pool(f(w_o(k)*X_o(k-1)+b_o(k)))$$

in the expression (1), pool is a pooling layer, f is an activation function, $w_o(k)$ is a weight that the $k$-th layer of network unit needs to learn, and $b_o(k)$ is a bias that the $k$-th layer of network unit needs to learn.

Illustratively, the pool (pooling layer) may use, but is not limited to, the following ways: Average pool pooling or Max pool pooling; and the activation function f may use, but is not limited to, the following activation functions: a Relu activation function or a Tanh activation function.

Specifically, the one-dimensional column-stacked OD data is subjected to convolutional residual processing to obtain origin-associated spatial feature information.

Specifically, the convolutional residual processing includes: performing convolutional pooling on the one-dimensional column-stacked OD data.

Illustratively, the one-dimensional column-stacked OD data needs to be subjected to multiple times of convolutional pooling.

A second convolutional pooling function is utilized to perform once convolutional pooling on the one-dimensional column-stacked OD data so as to obtain origin-associated spatial feature information 1; then the second convolutional pooling function is utilized to perform convolutional pooling on the output origin-associated spatial feature information 1 again so as to obtain origin-associated spatial feature information 2, and so on; and the second convolutional pooling function is utilized to perform convolutional pooling on the output origin-associated spatial feature information n-1 for the n-th time so as to obtain origin-associated spatial feature information n. In this way, multiple times of convolution pooling on the one-dimensional column-stacked OD data are completed.

Specifically, the second convolutional pooling function is expressed as follows:

$$X_d(k) = pool(f(w_d(k)*X_d(k-1)+b_d(k)))$$

where pool is a pooling layer, f is an activation function, $w_d(k)$ and $b_d(k)$ are respectively a weight and a bias that the $k$-th layer of network unit need to learn.

Illustratively, the pool (pooling layer) may use, but is not limited to, the following ways: Average pool pooling or Max pool pooling; and the activation function f may use, but is not limited to, the following activation functions: a Relu activation function or a Tanh activation function.

Specifically, the periodic OD two-dimensional graph sequence data is subjected to convolutional residual processing to obtain hybrid-associated spatial feature information.

Specifically, the convolutional residual processing includes: performing convolutional pooling on the periodic OD two-dimensional graph sequence data.

Illustratively, the periodic OD two-dimensional graph sequence data needs to be subjected to multiple times of convolutional pooling.

A third convolutional pooling function is utilized to perform once convolutional pooling on the periodic OD two-dimensional graph sequence data so as to obtain hybrid-associated spatial feature information 1; then the third convolutional pooling function is utilized to perform convolutional pooling on the output hybrid-associated spatial feature information 1 again so as to obtain hybrid-associated spatial feature information 2, and so on; and the third convolutional pooling function is utilized to perform convolutional pooling on the output hybrid-associated spatial feature information n-1 for the n-th time so as to obtain hybrid-associated spatial feature information n. In this way, multiple times of convolution pooling on the periodic OD two-dimensional graph sequence data are completed.

The input periodic OD two-dimensional graph sequence data is as follows:

$$X_{conv2} = X_t^{i,j},$$

where i is the serial number of the origin, j is the serial number of the destination, n and m are positive integers, i is an integer between 0 and n, and j is an integer between 0 and m.

Specifically, the third convolutional pooling function is expressed as follows:

$$X_{conv2}(k) = pool(f(w_{conv2}(k)*X_{conv2}(k-1)+b_{conv2}(k)))$$

where pool is a pooling layer, f is an activation function, $w_{conv2}(k)$ and $b_{conv2}(k)$ are respectively a weight and a bias that the $k$-th layer of network unit need to learn.

Illustratively, the pool (pooling layer) may use, but is not limited to, the following ways: Average pool pooling or Max pool pooling; and the activation function f may use, but is not limited to, the following activation functions: a Relu activation function or a Tanh activation function.

Specifically, the destination-associated spatial feature information, the origin-associated spatial feature information and the hybrid-associated spatial feature information are concatenated to obtain the spatial feature data.

Illustratively, the output spatial feature data is expressed as follows:

$$X = [X_{t1} \ldots X_{ti} \ldots X_{tn}]$$

Where $X_{ti}$ denotes the spatial feature data at moment ti output by the spatial-associated convolutional residual network.

Further, time feature data in the spatial feature data is extracted by using a time feature extraction model.

Illustratively, the spatial features are spatial features of continuous time points in multiple periods.

The time feature extraction model may employ, but is not limited to the following models: a long-short term neural network model (LSTM).

A long-short term memory neural network may learn long-term time dependence of the sequence, after the spatial feature data X are input into the long-short term memory neural network, the time feature data are output.

Further, the step of performing feature extraction on the time feature data includes:

fusing the time feature data to obtain time feature fusion data; and performing feature extraction on the time feature fusion data to obtain a predicted OD passenger flow value at a prediction moment.

Further, the prediction method further includes: assessing the predicted value of rail transit passenger flow demand based on deep learning by using a mean absolute error and a mean square error.

Illustratively, the mean absolute error (MAE) is as follows:

$$MAE = \frac{1}{n}\sum_{i} |x_i - \hat{x}_i|.$$

where $x_i$ and $\hat{x}_i$ respectively denote a true value and the predicted value, and n denotes the number of predicted values.

The mean square error (MSE) is as follows:

$$MSE = \frac{1}{n}\sum_{i} (x_i - \hat{x}_i)^2.$$

where $x_i$ and $\hat{x}_i$ respectively denote a true value and the predicted value, and n denotes the number of predicted values.

When the MAE is less than or equal to a first threshold value and the MSE is less than or equal to a second threshold value, the prediction accuracy of the prediction method satisfies requirements.

Illustratively, the first threshold value is a preset value, and may be modified according to the actual.

Specifically, a rail transit passenger flow demand prediction apparatus based on deep learning includes:

a data input module, configured to acquire OD data, to convert the OD data into periodic OD two-dimensional graph sequence data, and to output the periodic OD two-dimensional graph sequence data;

a spatial feature information extraction module, configured to extract spatial feature data in the periodic OD two-dimensional graph sequence data by using a spatial complex-associated convolutional residual network model;

a time information extraction module in multi-period mode, configured to extract time feature data in the spatial feature data; and

a data output module, configured to perform feature extraction on the time feature data so as to obtain a predicted OD passenger flow value at a prediction moment.

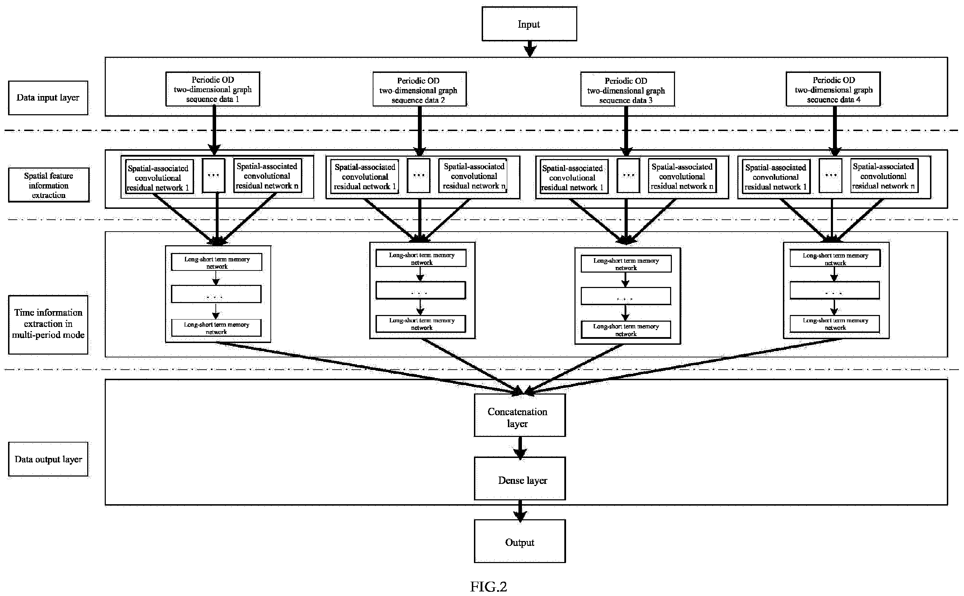

Illustratively, the prediction apparatus may employ, but is not limited to, the following models: a rail transit passenger flow demand prediction model based on deep learning, as shown in FIG. 2.

Illustratively, the model includes four layers: a data input layer, a spatial feature information extraction layer, a time information extraction layer in multi-period mode, and a data output layer.

The data input layer is configured to acquire OD data and to output four types of periodic OD two-dimensional graph sequence data.

The spatial feature information extraction layer is configured to receive the periodic OD two-dimensional graph sequence data transmitted from the data input layer by using a spatial complex-associated convolutional residual network model, and to output spatial feature data. The spatial complex-associated convolutional residual network model includes a plurality of spatial-associated convolutional residual networks (CNNRES_net).

The time information extraction layer in the multi-period mode is configured to receive spatial feature data transmitted from the spatial feature information extraction layer by using a long-short term memory network model, and to output time feature data.

The data output layer includes a concatenation layer and a dense layer, and is configured to receive the time feature data transmitted from the time information extraction layer in the multi-period mode, and to output a predicted OD passenger flow value at a prediction moment.

Specifically, the spatial complex-associated convolutional residual network model includes a plurality of spatial-associated convolutional residual networks. Each of the spatial-associated convolutional residual networks includes a data conversion module, a convolutional residual module, and a spatial feature information concatenation module.

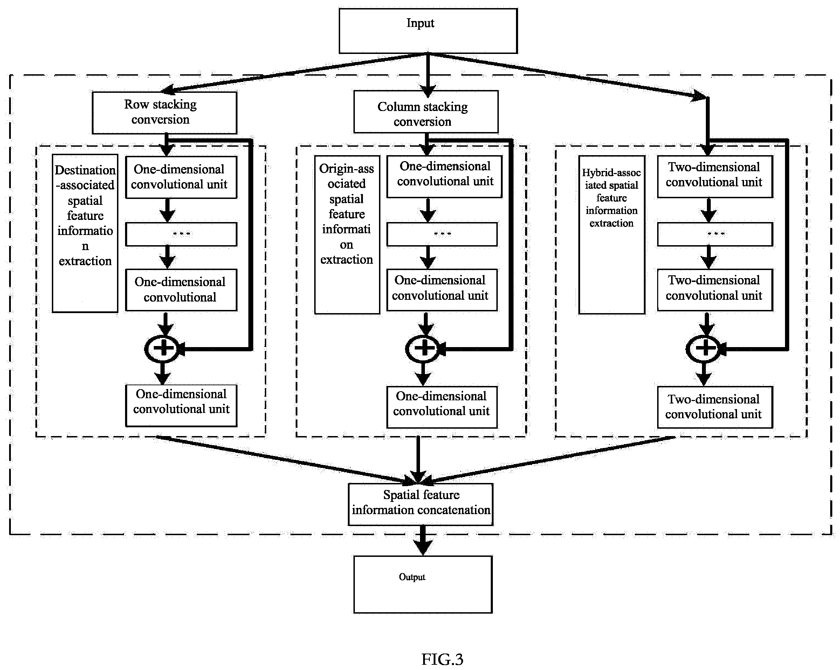

Illustratively, the spatial-associated convolutional residual network employs, but is not limited to, the following structures, as shown in FIG. 3.

Each of the spatial-associated convolutional residual networks includes a row stacking conversion module, a column stacking conversion module, three convolutional residual units, and a spatial feature information concatenation module. The three convolutional residual units are respectively a first convolutional residual unit, a second convolutional residual unit, and a third convolutional residual unit.

The row stacking conversion unit is arranged at an input end of the first convolutional residual unit, and the first convolutional residual unit is configured to extract destination-associated spatial feature information.

The column stacking conversion unit is arranged at an input end of the second convolutional residual unit, and the second convolutional residual unit is configured to extract origin-associated spatial feature information.

The periodic OD two-dimensional graph sequence data is directly input into the third convolutional residual unit, and the third convolutional residual unit is configured to extract hybrid-associated spatial feature information.

Output ends of the first convolutional residual unit, the second convolutional residual unit and the third convolutional residual unit are connected to an input end of the spatial feature information concatenation module. The spatial feature information concatenation module is configured to fuse data output by the first convolutional residual unit, the second convolutional residual unit and the third convolutional residual unit, and then to output the spatial feature data.

Specifically, the first convolutional residual unit includes a first convolutional neural unit and a residual connection.

The second convolutional residual unit includes a second convolutional neural unit and a residual connection.

The third convolutional residual unit includes a third convolutional neural unit and a residual connection.

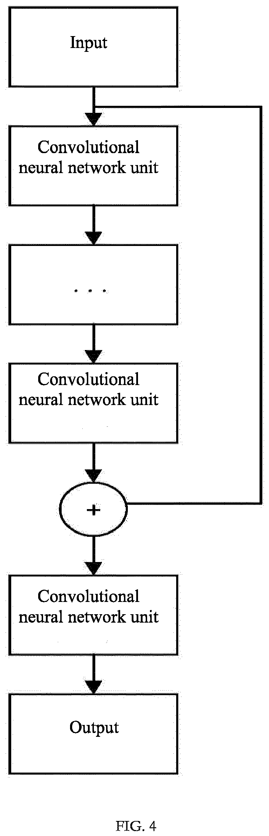

Illustratively, the first convolutional residual unit, the second convolutional residual unit and the third convolutional residual unit may employ, but are not limited to, the following structures, as shown in FIG. 4. In the figure, a residual connection across multiple layers to an output layer (or other layers close to the output layer) is added to a multilayer convolutional neural network unit superposition structure is illustrated. The data is input to a first layer of convolutional neural network unit from the input end, and then is transmitted to a second layer convolutional neural network unit after being subjected to convolutional pooling; after being subjected to convolution pooling, the data is transmitted to a third layer of convolutional neural network element... and then is output after being subjected to n times of convolution pooling. Meanwhile, a residual connection directly across multiple layers to the output layer (or other layer close to the output layer) is added on the input layer to prevent the gradient information from disappearing. The data subjected to residual processing is transmitted to the $n+1^{th}$ layer of convolutional neural network element again and then is output after being subjected to the convolutional pooling.

Information loss may be caused when the OD data is subjected to information processing by the multiple layers of convolutional neural network element. The residual connection is configured to prevent gradient information from disappearing.

Specifically, the first convolution neural unit is configured to perform convolution pooling on the one-dimensional row-stacked OD data, and is a one-dimensional convolution unit (Conv1Unit).

The second convolutional neural unit is configured to perform convolutional pooling on the one-dimensional column-stacked OD data, and is a one-dimensional convolutional unit.

The third convolutional neural unit is configured to perform convolutional pooling on the periodic OD two-dimensional graph sequence data, and is a two-dimensional convolutional unit (Conv2Unit).

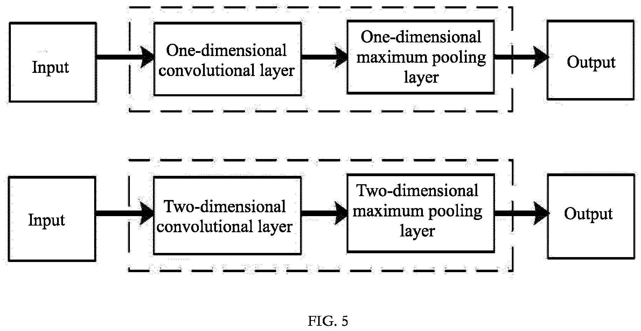

Illustratively, the structure of the one-dimensional convolution unit is as shown in FIG. 5, including a one-dimensional convolutional layer (Conv1) and a one-dimensional maximum pooling layer (maxpooling1D).

Illustratively, the structure of the two-dimensional convolution unit is as shown in FIG. 6, including a two-dimensional convolutional layer (Conv2) and a two-dimensional maximum pooling layer (maxpooling2D).

Specifically, the first convolutional neural unit is configured to perform convolutional pooling as follows:

$$X_o(k) = \mathrm{pool}(f(w_o(k)*X_o(k\text{-}1)+b_o(k)))$$

where pool is a pooling layer, f is an activation function, $w_o(k)$ and $b_o(k)$ are respectively a weight and a bias that the $k^{th}$ layer of network unit need to learn.

Illustratively, the pool (pooling layer) may use, but is not limited to, the following ways: Average pool pooling or Max pool pooling; and the activation function f may use, but is not limited to, the following activation functions: a Relu activation function or a Tanh activation function.

The second convolutional neural unit is configured to perform convolutional pooling as follows:

$$X_d(k) = pool(f(w_d(k)*X_d(k-1)+b_d(k)))$$

where pool is a pooling layer, f is an activation function, $w_d(k)$ and $b_d(k)$ are respectively a weight and a bias that the $k^{th}$ layer of network unit need to learn.

Illustratively, the pool (pooling layer) may use, but is not limited to, the following ways: Average pool pooling or Max pool pooling; and the activation function f may use, but is not limited to, the following activation functions: a Relu activation function or a Tanh activation function.

The third convolutional neural unit is configured to perform convolutional pooling as follows:

$$X_{conv2}(k) = pool(f(w_{conv2}(k)*X_{conv2}(k-1)+b_{conv2}(k)))$$

where pool is a pooling layer, f is an activation function, $w_{conv2}(k)$ and $b_{conv2}(k)$ are respectively a weight and a bias that the $k^{th}$ layer of network unit need to learn.

Illustratively, the pool (pooling layer) may use, but is not limited to, the following ways: Average pool pooling or Max pool pooling; and the activation function f may use, but is not limited to, the following activation functions: a Relu activation function or a Tanh activation function.

Further, the time information extraction layer in the multi-period mode is configured to receive the spatial feature data transmitted from the spatial feature information extraction layer, and to output time feature data. The spatial feature information extraction layer is a time feature extraction model.

Illustratively, the time feature extraction model employs, but is not limited to, the following model: a long-short term memory neural network model.

The time information extraction layer in the multi-period mode refers to constructing a time feature information extraction unit for different periodic input information, and each extraction unit is composed of a series of long-short term memory neural network layers.

specifically, the data output layer is configured to receive the time feature data transmitted from the time information extraction layer in the multi-period mode, and to output the predicted OD passenger flow value at the prediction moment. The data output layer includes a concatenation layer and a dense layer.

Illustratively, the concatenation layer is arranged at the input end of the dense layer and configured to fuse the time feature data.

The dense layer is configured to perform feature extraction on the fused time data to obtain the predicted OD passenger flow value at the prediction moment.

Further, the prediction apparatus further includes an assessment apparatus.

The assessment apparatus is configured to assess the rail transit passenger flow demand prediction method and apparatus based on the deep learning by using a mean absolute error and a mean square error.

Illustratively, the assessment apparatus employs, but is not limited to the following apparatuses: a mean absolute error apparatus, and a mean square error apparatus, or may employ, but is not limited to the following apparatuses: an apparatus including both the absolute error apparatus and the mean square error apparatus.

Although the present disclosure has been described in detail with reference to the foregoing embodiments, it should be understood by those of ordinary skill in the art that the technical solutions described in the foregoing embodiments may be modified or equivalents may be substituted for some of the technical features thereof. These modifications or substitutions do not make the essence of the corresponding technical solutions depart from the spirit and scope of the technical solutions of various embodiments of the present disclosure.

**Claims**

1. A rail transit passenger flow demand prediction method based on deep learning, **characterized in that**, the method comprises the following steps: acquiring OD data, and converting the OD data into periodic OD two-dimensional graph sequence data; extracting spatial feature data in the periodic OD two-dimensional graph sequence data by using a spatial complex-associated convolutional residual network model; extracting time feature data in the spatial feature data by using a time feature extraction model; performing feature extraction processing on the time feature data to obtain a predicted OD passenger flow value at a prediction moment.

2. The rail transit passenger flow demand prediction method based on deep learning according to claim 1, **characterized in that**, the extracting spatial feature data in the periodic OD two-dimensional graph sequence data comprises: performing row stacking conversion on the periodic OD two-dimensional graph sequence data to obtain one-dimensional row-stacked OD data; performing column stacking conversion on the periodic OD two-dimensional graph sequence data to obtain one-dimensional column-stacked OD data; performing convolutional residual processing on the one-dimensional row-stacked OD data to obtain destination-associated spatial feature information; performing convolutional residual processing on the one-dimensional column-stacked OD data to obtain origin-associated spatial feature information; performing convolutional residual processing on the periodic OD two-dimensional graph sequence data to obtain hybrid-associated spatial feature information; and concatenating the destination-associated spatial feature information, the origin-associated spatial feature information and the hybrid-associated spatial feature information to obtain the spatial feature data.

3. The rail transit passenger flow demand prediction method based on deep learning according to claim 2, **characterized in that**, the performing convolutional residual processing on the data comprises: performing convolutional pooling on the one-dimensional row-stacked OD data; performing convolutional pooling on the one-dimensional column-stacked OD data; and performing convolutional pooling on the periodic OD two-dimensional graph sequence data.

4. The rail transit passenger flow demand prediction method based on deep learning according to claim 3, **characterized in that**, the one-dimensional row-stacked OD data is subjected to convolutional pooling by using a first convolutional pooling function, and the first convolutional pooling function is expressed as follows: $X_o(k) = pool(f(w_o(k)*X_o(k-1)+b_o(k)))$ (1), in the expression (1), pool is a pooling layer, f is an activation function, $w_o(k)$ is a weight that the $k$-th layer of network unit needs to learn, and $b_o(k)$ is a bias that the $k$-th layer of network unit needs to learn; the one-dimensional column-stacked OD data is subjected to convolutional pooling by using a second convolutional pooling function, and the second convolutional pooling function is expressed as follows: $X_d(k) = pool(f(w_d(k)*X_d(k-1)+b_d(k)))$ (2), in the expression (2), pool is a pooling layer, f is an activation function, $w_d(k)$ is a weight that the $k$-th layer of network unit needs to learn, and $b_d(k)$ is a bias that the $k$-th layer of network unit needs to learn; the periodic OD two-dimensional graph sequence data is subjected to convolutional pooling by using a third convolutional pooling function, and the third convolutional pooling function is expressed as follows: $X_{conv2}(k) = pool(f(w_{conv2}(k)*X_{conv2}(k-1)+b_{conv2}(k)))$ (3), in the expression (3), pool is a pooling layer, f is an activation function, $w_{conv2}(k)$ is a weight that the $k$-th layer of network unit needs to learn, and $b_{conv2}(k)$ is a bias that the $k$-th layer of network unit needs to learn.

5. The rail transit passenger flow demand prediction method based on deep learning according to claim 1, **characterized in that**, the step of performing feature extraction on the time feature data comprises: performing fusion processing on the time feature data to obtain time feature fusion data; and performing feature extraction on the time feature fusion data to obtain a predicted OD passenger flow value.

6. The rail transit passenger flow demand prediction method based on deep learning according to claim 1, **characterized in that**, the prediction method further comprises: assessing the predicted OD passenger flow value by using a mean absolute error and a mean square error; acquiring a mean absolute error and a mean square error between a true value and the predicted value, wherein the prediction accuracy of the prediction method satisfies requirements when the mean absolute error is less than or equal to a first threshold and the mean square error is less than or equal to a second threshold.

7. A rail transit passenger flow demand prediction apparatus based on deep learning, **characterized in that**, the apparatus comprises: a data input module, configured to acquire OD data, to convert the OD data into periodic OD two-dimensional graph sequence data, and to output the periodic OD two-dimensional graph sequence data; a spatial feature information extraction module, configured to extract spatial feature data in the periodic OD two-dimensional graph sequence data by using a spatial complex-associated convolutional residual network model; a time information extraction module in multi-period mode, configured to extract time feature data in the spatial feature data; and a data output module, configured to perform feature extraction on the time feature data so as to obtain a predicted OD passenger flow value at a prediction moment.

8. The rail transit passenger flow demand prediction apparatus based on deep learning according to claim 7, **characterized in that**, the spatial complex-associated convolutional residual network model comprises a number of spatial-associated convolutional residual networks, the spatial-associated convolutional residual networks being configured to extract spatial-associated feature data of the periodic OD two-dimensional graph sequence data.

**9.** The rail transit passenger flow demand prediction apparatus based on deep learning according to claim 8, **characterized in that**, each of the spatial-associated convolutional residual networks comprises a data conversion module, a convolutional residual module, and a spatial feature information concatenation module; the data conversion module comprises a row stacking conversion module and a column stacking conversion module; the row stacking conversion module is configured to: receive the periodic OD two-dimensional graph sequence data transmitted from a data input layer, perform row stacking conversion on the periodic OD two-dimensional graph sequence data, and output one-dimensional row-stacked OD data; the column stacking conversion module is configured to: receive the periodic OD two-dimensional graph sequence data transmitted from the data input layer, perform column stacking conversion on the periodic OD two-dimensional graph sequence data, and output one-dimensional column-stacked OD data; the convolutional residual module comprises a first convolutional residual unit, a second convolutional residual unit, and a third convolutional residual unit; the first convolutional residual unit is configured to: receive the one-dimensional row-stacked OD data transmitted from the row stacking conversion module, perform convolutional residual processing on the one-dimensional row-stacked OD data, and output a destination-associated spatial feature information; the second convolutional residual unit is configured to: receive the one-dimensional column-stacked OD data transmitted from the column stacking conversion module, perform convolutional residual processing on the one-dimensional column-stacked OD data, and output a origin-associated spatial feature information; the third convolutional residual unit is configured to: receive the periodic OD two-dimensional graph sequence data transmitted from the data input layer, perform convolutional residual processing on the periodic OD two-dimensional graph sequence data, and output a hybrid-associated spatial feature information; the spatial feature information concatenation module is configured to: receive the spatial feature information transmitted from the first convolutional residual unit, the second convolutional residual unit, and the third convolutional residual unit, and perform concatenating the destination-associated spatial feature information, the origin-associated spatial feature information and the hybrid-associated spatial feature information.

**10.** The rail transit passenger flow demand prediction apparatus based on deep learning according to claim 9, **characterized in that**, the first convolutional residual unit comprises a first convolutional neural unit and a residual connection; the second convolutional residual unit comprises a second convolutional neural unit and a residual connection; the third convolutional residual unit comprises a third convolutional neural unit and a residual connection; the first convolutional neural unit is configured to perform convolutional pooling on the one-dimensional row-stacked OD data, the first convolutional neural unit being a one-dimensional convolutional unit; the second convolutional neural unit is configured to perform convolutional pooling on the one-dimensional column-stacked OD data, the second convolutional neural unit being a one-dimensional convolutional unit; and the third convolutional neural unit is configured to perform convolutional pooling on the periodic OD two-dimensional graph sequence data, the third convolutional neural unit being a two-dimensional convolutional unit.

**11.** The rail transit passenger flow demand prediction apparatus based on deep learning according to claim 10, **characterized in that**, the first convolutional neural unit is configured to perform convolutional pooling as follows: $X_o(k)$ = pool(f($w_o(k)*X_o(k-1)+b_o(k)$)), wherein pool is a pooling layer, f is an activation function, $w_o(k)$ is a weight that the $k^{th}$ layer of network unit needs to learn, and $b_o(k)$ is a bias that the $k^{th}$ layer of network unit needs to learn; the second convolutional neural unit is configured to perform convolutional pooling as follows: $X_d(k)$ = pool(f($w_d(k)*X_d(k-1)+b_d(k)$)), wherein pool is a pooling layer, f is an activation function, $w_d(k)$ is a weight that the $k^{th}$ layer of network unit needs to learn, and $b_d(k)$ is a bias that the $k^{th}$ layer of network unit needs to learn; the third convolutional neural unit is configured to perform convolutional pooling as follows: $X_{conv2}(k)$ = pool(f($w_{conv2}(k)*X_{conv2}(k-1)+b_{conv2}(k)$)), wherein pool is a pooling layer, f is an activation function, $w_{conv2}(k)$ is a weight that the $k^{th}$ layer of network unit needs to learn, and $b_{conv2}(k)$ is a bias that the $k^{th}$ layer of network unit needs to learn.

**12.** The rail transit passenger flow demand prediction apparatus based on deep learning according to claim 7, **characterized in that**, the time information extraction module in multi-period mode is configured to: receive the spatial feature data transmitted from the spatial feature information extraction module, and output the time feature data; and a spatial feature information extraction layer is a time feature extraction model.

**13.** The rail transit passenger flow demand prediction apparatus based on deep learning according to claim 12, **characterized in that**, the time feature extraction model is a long-short term memory neural network model.

**14.** The rail transit passenger flow demand prediction apparatus based on deep learning according to claim 7, **characterized in that**, the data output module is configured to: receive the time feature data transmitted from the time information extraction module in the multi-period mode, and output the predicted OD passenger flow value at the prediction moment.

**15.** The rail transit passenger flow demand prediction apparatus based on deep learning according to claim 14, **characterized in that**, the data output module comprises a concatenation module and a dense module; the concatenation module is configured to: receive the time feature data transmitted from the time information extraction module in the multi-period mode, fuse the time feature data, and output fused time feature; and the dense module is configured to: receive the fused time feature transmitted from the concatenation module, perform feature extraction on the fused time feature, and output the predicted OD passenger flow value at the prediction moment.

**16.** The rail transit passenger flow demand prediction apparatus based on deep learning according to claim 7, **characterized in that**, the prediction apparatus further comprises an assessment apparatus, the assessment apparatus being configured to assess the prediction accuracy of the rail transit passenger flow demand prediction method and apparatus based on the deep learning by using a mean absolute error and a mean square error.

```
                        ┌─────────────────┐
                        │      Start      │
                        └─────────────────┘
                                 │
                                 ▼
        ┌──────────────────────────────────────────────────┐
        │  Acquire OD data, and convert data into periodic OD │
        │            two-dimensional sequence data           │
        └──────────────────────────────────────────────────┘
                                 │
                                 ▼
        ┌──────────────────────────────────────────────────┐
        │  Extract spatial feature data in the data by means of │
        │  spatial complex-associated convolutional residual │
        │                   network model                    │
        └──────────────────────────────────────────────────┘
                                 │
                                 ▼
        ┌──────────────────────────────────────────────────┐
        │ Extract time feature data in the spatial feature data by │
        │      means of a time feature information model     │
        └──────────────────────────────────────────────────┘
                                 │
                                 ▼
        ┌──────────────────────────────────────────────────┐
        │    Perform feature extraction on the time feature │
        │  information to obtain an OD passenger flow at a   │
        │                  prediction moment                │
        └──────────────────────────────────────────────────┘
                                 │
                                 ▼
                          ◇────────────◇
                  ◇───────  Whether to perform  ───────◇
                  ◇          assessment or not          ◇
                          ◇────────────◇
                                 │ Yes
                                 ▼
        ┌──────────────────────────────────────────────────┐
        │ Assess a rail transit passenger flow demand prediction │
        │           method based on deep learning            │
        └──────────────────────────────────────────────────┘
                                 │
        No                       ▼
                        ┌─────────────────┐
                        │       End       │
                        └─────────────────┘
```

FIG. 1

FIG.2

FIG.3

FIG. 4

FIG. 5

## INTERNATIONAL SEARCH REPORT

| | |
|---|---|
| | International application No. |
| | **PCT/CN2020/104902** |

**A.  CLASSIFICATION OF SUBJECT MATTER**

G06Q 10/04(2012.01)i

According to International Patent Classification (IPC) or to both national classification and IPC

**B.  FIELDS SEARCHED**

Minimum documentation searched (classification system followed by classification symbols)

G06Q

Documentation searched other than minimum documentation to the extent that such documents are included in the fields searched

Electronic data base consulted during the international search (name of data base and, where practicable, search terms used)

CNPAT, EPODOC, WPI, CNKI, ISI: 客流, 需求, 预测, 深度, 学习, 目的地, 出发地, 空间, 时间, 特征, 卷积, 残差, 网络, passenger, flow, demand, prediction, deep, learning, origin, destination, spatial, time, feature, convolutional, residual, network

**C.  DOCUMENTS CONSIDERED TO BE RELEVANT**

| Category* | Citation of document, with indication, where appropriate, of the relevant passages | Relevant to claim No. |
|---|---|---|
| PX | CN 110991775 A (BEIJING NATIONAL RAILWAY RESEARCH & DESIGN INSTITUTE OF SIGNAL & COMMUNICATION LTD.) 10 April 2020 (2020-04-10) claims 1-16, description, paragraphs [0005]-[0021] | 1-16 |
| X | CN 107529651 A (BEIHANG UNIVERSITY) 02 January 2018 (2018-01-02) description, paragraphs [0051]-[0114] and figures 1-5 | 1, 5-8, 12-16 |
| A | CN 109492814 A (SHENZHEN INSTITUTES OF ADVANCED TECHNOLOGY, CHINESE ACADEMY OF SCIENCES) 19 March 2019 (2019-03-19) entire document | 1-16 |
| A | CN 108985475 A (XIAMEN UNIVERSITY) 11 December 2018 (2018-12-11) entire document | 1-16 |
| A | US 2017249534 A1 (FUJITSU LIMITED) 31 August 2017 (2017-08-31) entire document | 1-16 |

☐ Further documents are listed in the continuation of Box C.   ☑ See patent family annex.

| | |
|---|---|
| *  Special categories of cited documents: | "T" later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X" document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&" document member of the same patent family |

| Date of the actual completion of the international search | Date of mailing of the international search report |
|---|---|
| **09 November 2020** | **30 November 2020** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
**Information on patent family members**

| International application No. |
| --- |
| **PCT/CN2020/104902** |

| Patent document cited in search report | | | Publication date (day/month/year) | Patent family member(s) | | | Publication date (day/month/year) |
| --- | --- | --- | --- | --- | --- | --- | --- |
| CN | 110991775 | A | 10 April 2020 | CN | 110991775 | B | 26 June 2020 |
| CN | 107529651 | A | 02 January 2018 | | None | | |
| CN | 109492814 | A | 19 March 2019 | | None | | |
| CN | 108985475 | A | 11 December 2018 | | None | | |
| US | 2017249534 | A1 | 31 August 2017 | US | 10185893 | B2 | 22 January 2019 |
| | | | | JP | 2017157213 | A | 07 September 2017 |
| | | | | GB | 2547712 | A | 30 August 2017 |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010133886